# EUROPÄISCHE PATENTSCHRIFT

(11) **EP 1 785 646 B1**
(45) Veröffentlichungstag und Bekanntmachung des Hinweises auf die Patenterteilung: **09.04.2008**
(21) Anmeldenummer: 06122016.6
(22) Anmeldetag: 10.10.2006
(51) Int. Cl.: F16H 57/04, F16H 57/08

(54) **Planetenträger**
Planet carrier
Porte-satellites

(30) Priorität: 12.11.2005 DE 102005054084
(43) Veröffentlichungstag der Anmeldung: 16.05.2007
(73) Patentinhaber: Schaeffler KG, 91074 Herzogenaurach (DE)
(72) Erfinder: Jurjanz, Ramon, 91074, Herzogenaurach (DE); Biermann, Thorsten, 96172, Mühlhausen (DE); Metten, Norbert, 91086, Aurachtal (DE)

(56) Entgegenhaltungen:
- EP-A2- 0 738 843
- EP-A2- 0 764 798
- EP-A2- 1 319 871
- WO-A-03/095870
- DE-A1- 19 736 686
- JP-A- 6 058 381
- JP-A- 6 124 857
- JP-A- 7 208 587
- JP-A- 61 038 249
- US-A- 2 518 837

## Beschreibung

### Gebiet der Erfindung

Die Erfindung betrifft einen Planetenträger mit Planetenbolzen, die in wenigstens einem Wandabschnitt des Planetenträgers abgestützt sind, der Planetenträger mit mindestens einem an dem Wandabschnitt abgestützten Axiallager, wobei das Axiallager mittels wenigstens einer Axialscheibe an dem Wandabschnitt abgestützt ist, der Planetenträger weiter mit zumindest einer die Planetenradbolzen übergreifenden Schmierölzufuhr zu den Planetenbolzen, wobei die Schmierölzufuhr wenigstens eine am Planetenträger festgelegte und dabei Öffnungen zu den hohlen Planetenbolzen übergreifende Ölstauscheibe aufweist.

### Hintergrund der Erfindung

Ein derartiger Planetenträger ist in DE195 34 791 A1 näher beschrieben. Der Wandabschnitt ist in der Regel an dem Nabenbauteil des Planetenträgers oder anderen Bauteilen des Planetenträgers ausgebildet, an denen ein Axiallager in Form eines Axialrollen- bzw. Nadellagers abgestützt ist. Die Schmierölzufuhr führt und leitet das durch Fliehkraft radial nach außen. Das nach außen geschleuderte Schmieröl wird möglichst vor axial gerichteten Öffnungen an entsprechend hohl gestalteten Planetenbolzen gestaut. Durch die Öffnungen fließt das Öl über Schmierkanäle im Bolzen zu den Lagern der Planetenräder weiter.

Da die Öffnungen der hohlen Planeten in der Regel axial gerichtet sind, sind diese an sich kaum für die benötigten größeren Mengen Schmieröl zugänglich. Es ist deshalb ein Ölstaublech vorgesehen, auf das möglichst große Mengen an Schmieröl prallen und das die Ölströme radial nach außen leitet. Schließlich sammelt und staut das Ölstaublech das Öl schließlich radial innen vor den Öffnungen so, dass ausreichende Mengen an Schmieröl vor den Löchern vorhanden sind und diese auch durch den Staudruck in die Planetenlagerungen gelangen.

DE 195 34 791 A1 beschreibt eine Ölstauscheibe in Form einer Axialscheibe des Axiallagers. Diese Ölstauscheibe ist mit dem Axiallager am Planetenträger festgelegt und übergreift dabei die Öffnungen zu den hohlen Planetenbolzen. An der Axialscheibe erstreckt sich radial nach innen ein Leitabschnitt zum Sammeln und Weiterleiten des Öls radial nach außen zu den Planetenbolzen hin.

Die Axialscheibe der der Schmierölzufuhr bzw. des Axiallagers nach DE 195 34 791 A1 liegt rückseitig teilweise an einem Wandabschnitt des Planetenträgers an. Zwischen den rückseitigen Abschnitten der Axialscheibe, die nicht an dem Wandabschnitt anliegen, und der Stirnseite des Planetenbolzens sind nach DE 195 34 791 A1 Spalte zwischen der Axialscheibe und der axialen Öffnung des jeweiligen Planetenbolzens ausgebildet. In den Spalten wird das Öl mit Hilfe der Axialscheibe vor der Öffnung gestaut, da die Axialscheibe radial nach der Öffnung und nach dem Spalt dichtend an dem Wandabschnitt des Planetenträgers anliegt. Somit übergreift die Axialscheibe den Planetenbolzen und die Schmierölöffnungen.

An der Axialscheibe ist eine Axialwälzlaufbahn ausgebildet, auf der die Wälzkörper des Axiallagers abrollen. Die Axialwälzlaufbahn ist an den Stellen, an denen rückseitig der Axialscheibe der Spalt zwischen dem Bolzen und der Axialscheibe ausgebildet ist, insbesondere bei hohen Belastungen des Lagers nicht ausreichend axial unterstützt.

Das Öl soll auf seinem Weg radial von innen nach außen auch das Axiallager durchströmen. In der Schmierölzufuhr nach DE 195 34 791 A1 ist jedoch ein Großteil des Öls durch den Leitabschnitt der Axialscheibe aufgefangen und ist somit der Schmierung des Axiallagers entzogen. Die Axialscheibe ist aufgrund des konischen Leitabschnitts relativ groß und deren Herstellung aufwändig.

Weiterhin zeigt DE 197 36 686 A1 einen Planetenträger mit den Merkmalen des Oberbegriffes des Anspruches 1.

### Zusammenfassung der Erfindung

Die Aufgabe der Erfindung ist es daher, einen Planetenträger zu schaffen, der hinsichtlich Schmierung des Axiallagers und hinsichtlich der Planetenlagerung verbessert ist.

Diese Aufgabe ist nach dem Gegenstand des Anspruches 1 und weiterer abhängiger Ansprüche gelöst.

Die Erfindung betrifft alle Arten von Planetenträgern; in denen eine beliebige Anzahl Planetenbolzen mit Planetenrädern aufgenommen sind. Die Wandabschnitte des Planetenträgers aus Blech oder Gussmaterial weisen Aufnahmen auf, in denen die Planeten abgestützt sind. Die Axialscheibe, an dem das Axiallager abgestützt ist, ist ein Bestandteil der Schmierölzufuhr zu den Planetenbolzen.

Die Schmierölzufuhr ist eine Einheit aus mindestens einer Axialscheibe und mindestens Ölstauscheibe. Die Ölstauscheibe übergreift die Öffnungen zu den hohlen Planetenbolzen. Erfindungsgemäß ist die Ölstauscheibe teilweise axial zwischen der Axialscheibe und dem Wandabschnitt des Planetenträgers so angeordnet, dass die Axialscheibe die Ölstauscheibe radial von innen nach außen gerichtet teilweise überlappt.

Der beispielsweise radial innen aus einer Schmierölöffnung einer hohlen Getriebewelle austretende Schmierstoff wird radial nach außen gespritzt und/oder bewegt sich radial durch Fliehkraft nach außen, strömt an der Axialscheibe entlang radial nach außen und passiert dabei zunächst das Axiallager. Dann wird das Öl über die Überlappung hinweg auf die Ölstauscheibe geleitet und schließlich mittels der Ölstauscheibe vor den Schmieröffnungen zu den Planetenbolzen gesammelt und gestaut.

Da die Axialscheibe die Ölstauscheibe radial von innen nach außen gerichtet teilweise überlappt, strömt das Öl ungehindert und ohne Schmierölverluste über die Überlappung hinweg auf die Ölstauscheibe. Das Axiallager liegt direkt in dem ungeteilten Schmierölstrom, der mittels der Ölstauscheibe aufgefangen wird, und ist deshalb ausreichend versorgt. Die Ölstauscheibe weist radial außen im Anschluss an die Öffnungen eine Ölsammelrille auf. Die Ölsammelrille ist radial nach außen und axial in beide Richtungen durch Material der Ölstauscheibe begrenzt und radial nach innen zur Rotationsachse des Planetenträges hin offen.

Ein weiterer Vorteil der Erfindung ergibt sich, wenn wie mit einer Ausgestaltung der Erfindung vorgesehen ist, die Ölstauscheibe zumindest mittels der Axialscheibe an dem Wandabschnitt gehalten ist. Die Ölstauscheibe wird demnach zwischen der Axialscheibe und dem Abschnitt des Planetenträgers, an dem das Axiallager abgestützt ist axial eingeklemmt und so nach ausreichender Zentrierung in Position gehalten. Zusätzliche Haltemittel wie Niete oder ähnliches entfallen.

Es ist sinnvoll, entweder den Planetenträger oder die Axialscheibe mit Zentriervorsprüngen wie zum Beispiel mit einem Zentrierbund zu versehen. An dem Zentrierbund ist die Ölstauscheibe so positioniert, zentriert oder geführt, dass die Schmieröffnungen für das gesammelte Öl zugänglich sind.

Eine weitere Ausgestaltung der Erfindung sieht vor, dass die Axialscheibe zumindest rückseitig der Wälzlastzone der Axialwälzlaufbahn an dem Wandabschnitt abgestützt ist. Damit ist die maximale Belastbarkeit des Axialwälzlagers abgesichert. Dazu sieht eine Ausgestaltung der Erfindung weiter vor, dass die Axialscheibe erst radial außen im Anschluss an die ringscheibenförmige Axiallaufbahn von dem Wandabschnitt absteht. Die Scheibe ist in radiale Richtung von dem Abschnitt mit der Wälzlaufbahn an von dem Wandabschnitt des Platenträgers weggeformt, so dass diese längs geschnitten betrachtet gekröpft ist. Dadurch entsteht radial außen nach der Axialwälzlaufbahn zwischen dem Ringabschnitt und dem Wandabschnitt ein Ringspalt. In den Ringspalt taucht die Ölstauscheibe zumindest teilweise radial in ein und ist dort an dem Abschnitt der Axialscheibe zentriert und/oder eingeklemmt.

Eine weitere Ausgestaltung der Erfindung sieht vor, dass aus der Ölstauscheibe axial Ölleiter hervorstehen. Die schalen- oder röhrenförmigenhohlzylindrischen Ölleiter gehen von dem Abschnitt der Ölstauscheibe ab, in dem bei Betrieb ein Ölstau vor den Schmieröffnungen der Planetenbolzen zu erwarten ist. Vorzugsweise ragen die Ölleiter axial in die hohlen Planetenbolzen hinein. Die schalenförmigen Öleiter sind ein Abschnitt in der Gestalt eines Segmentes, das entsteht, wenn beispielsweise ein Hohlzylinder längs der Symmetrieachse halbiert ist.

Eine weitere Ausgestaltung der Erfindung sieht vor, dass die Ölstauscheibe mittels der Ölleiter an dem Wandabschnitt zentriert und/oder festgelegt ist. Dazu ist die Ölstauscheibe vorzugsweise in die Schmieröffnung zum Planetenbolzen und/oder hohlen Planetenbolzen hineingesteckt, eingepresst oder eingeschnappt. Die Ölleiter sind entweder an der Ölstauscheibe befestigt oder die Ölstauscheibe und die Ölleiter sind einteilig miteinander ausgebildet. Wahlweise weist die Ölstauscheibe die Öffnungen zu den hohlen Planetenbolzen auf. Von jeder der axialen Öffnungen aus erstreckt sich über die Ölleiter ein Schmierkanal in den jeweiligen Planetenbolzen.

Die bevorzugten Werkstoffe für die Herstellung der Ölstauscheibe und/oder der Ölleiter sind Kunststoffe, Stähle und auch Nichteisenmetalle und deren Legierungen. Die Axialscheibe und die Ölstauscheibe sind als separate Einzelteile und deshalb kostengünstig herstellbar.

Eine weitere Ausgestaltung der Erfindung betrifft die Befestigung der Axialscheibe an dem Planetenträger. E ist vorgesehen, dass die Axialscheibe im Formschluss mit einer Scheibe an dem Wandabschnitt fest ist. Die Scheibe ist beispielsweise eine weitere Axialscheibe für ein weiteres Axiallager, die an der von der Ölstauscheibe abgewandten Seite des Wandabschnitts anliegt. Wenigstens eine der beiden Scheiben ragt mit wenigstens einem axialen Fortsatz durch einen zentralen Durchgang an dem Wandabschnitt in Richtung der Gegenseite hinein oder greift hindurch. Die Axialscheiben sind dabei über den Fortsatz oder die Fortsätze formschlüssig miteinander verbunden.

### Kurze Beschreibung der Zeichnungen

Die Erfindung wird nachfolgend anhand von Ausführungsbeispielen näher erläutert. Es zeigen:
- Figur 1: einen Planetenträger im Längsschnitt entlang der Rotationsachse des Planetengetriebes,
- Figur 2: das Detail X aus der Darstellung des Planetenträgers nach Figur 1, vergrößert und nicht maßstäblich dargestellt,
- Figur 3: das Detail Z aus der Darstellung des Planetenträgers nach Figur 1, vergrößert und nicht maßstäblich dargestellt,
- Figur 4: eine Modifikation des Details X gegenüber dem Detail X aus der Darstellung nach Figur 2,
- Figur 5: eine Modifikation des Details Z gegenüber dem Detail Z aus der Darstellung nach Figur 3,

### Detaillierte Beschreibung der Zeichnung

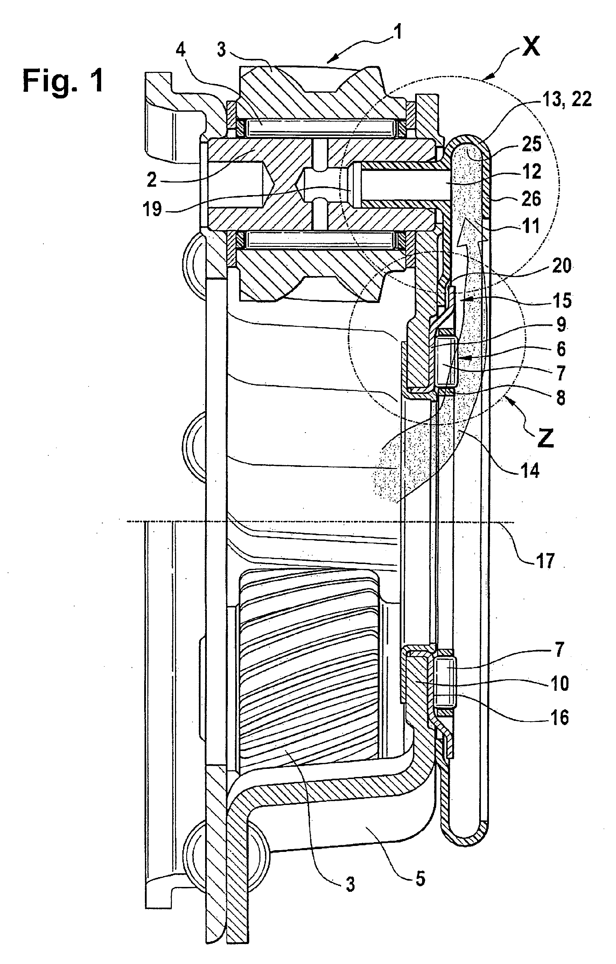

Figur 1 zeigt einen Planetenträger 1 mit Planetenbolzen 2. Auf den Planetenbolzen 2 sind Planetenräder 3 mittels Wälzlagerungen 4 in form von Nadellagern wälzgelagert. Die Planetenbolzen 2 sind gegen die auf die Planetenräder 3 wirkenden Belastungen in einem Wandabschnitt 4 eines Gehäuses 5 des Planetenträgers 1 abgestützt.

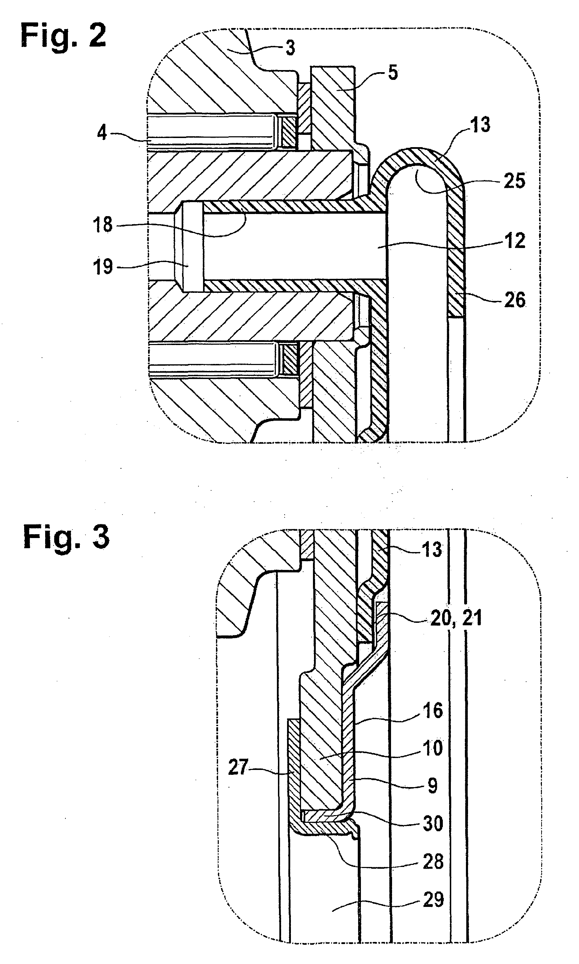

An dem Planetenträger 1 ist axial ein Axialwälzlager 6 in Form eines Axialnadellagers mit Nadeln 7 in einem Käfig 8 abgestützt. Das Axiallager 6 weist eine Axialscheibe 9 mit einer Axialwälzlaufbahn 16 auf, die rückseitig an einem Wandabschnitt 10 des Gehäuses 5 abgestützt ist. Die Axialscheibe 9 steht, wie aus Figur 3 ersichtlich ist, radial außen im Anschluss an die ringscheibenförmige Axialwälzlaufbahn 16 von dem Wandabschnitt 10 so ab, dass radial im Anschluss an die ringscheibenförmige Laufbahn ein Ringspalt 20 zwischen dem Wandabschnitt 10 und der Axialscheibe 9 ausgebildet ist.

Der Planetenträger 1 weist eine Schmierölzufuhr 11 zu den Planetenbolzen 2 auf, die axiale Schmieröffnungen 12 zu hohlen Planetenbolzen 2 übergreift. Die Schmierölzufuhr 11 ist durch die Axialscheibe 9 und eine am Planetenträger 1 festgelegte sowie dabei die Schmieröffnungen 12 zu den hohlen Planetenbolzen 2 übergreifende Ölstauscheibe 13 bzw. 22 gebildet.

Wie aus Figur 3 hervorgeht, taucht die Ölstauscheibe 13 zumindest teilweise radial in den Ringspalt 20 mit Axialspiel 21 ein. Aus der Ölstauscheibe 13 stehen axial Ölleiter 18 hervor. Die Ölstauscheibe 13 und die hohlzylindrischen Ölleiter 18 sind in der Darstellung nach Figur 2 einteilig aus Kunststoff gebildet. Die Ölstauscheibe 13 weist die Schmieröffnungen 12 zu den hohlen Planetenbolzen 2 auf. Von jeder der axialen Schmieröffnungen 12 aus erstreckt sich ein Schmierkanal 19 in den jeweiligen Planetenbolzen 2.

Figur 2 zeigt, dass die Ölstauscheibe 13 mittels der Ölleiter 18 an dem Wandabschnitt 10 zur Rotationsachse 17 zentriert und festgelegt ist. Dazu sind die Ölleiter 18 axial in die Schmierkanäle 19 der Planetenbolzen 2 beispielsweise eingepresst.

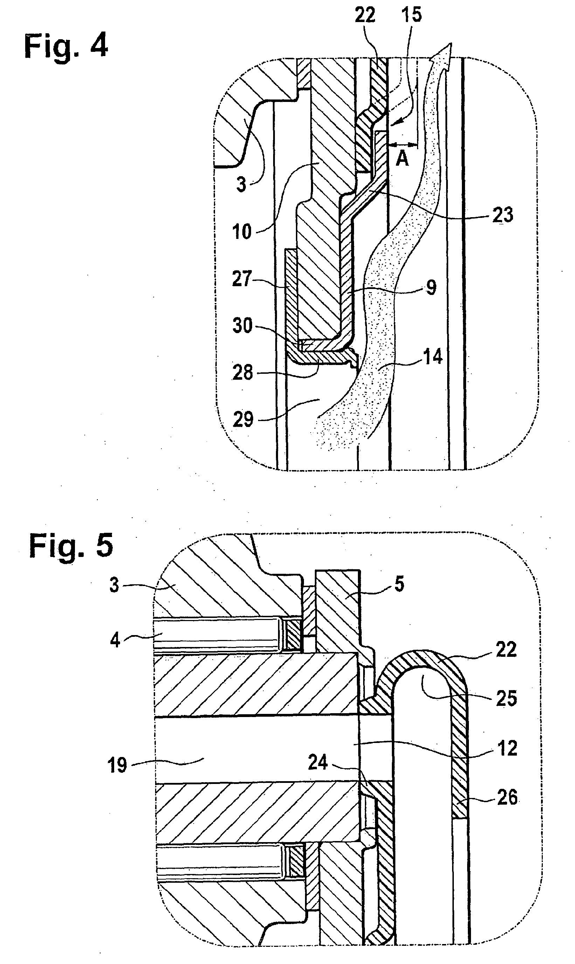

Wie in Figur 4, einem Detail X der Ölstauscheibe 22, dargestellt ist, ist die Ölstauscheibe 22 mittels der Axialscheibe 9 auf dem Absatz 23 zentriert und axial zwischen der Axialscheibe 9 und dem Wandabschnitt 10 eingeklemmt und somit am Planetenträger 1 festgelegt. Die Ölstauscheibe 22 ist mit einem Ringabschnitt axial zwischen der Axialscheibe 9 und dem Wandabschnitt 10 so angeordnet, dass die Axialscheibe 9 die Ölstauscheibe 13 radial von innen nach außen gerichtet teilweise überlappt. Der mit dem Doppelpfeil angedeutete Ölfluss 14 strömt zunächst durch das Axiallager 6 und passiert dann den Überlappungsbereich 15. Die Ölstauscheibe 22 kann wie in der gestrichelten Darstellung auch um den Abstand A axial über den Überlappungsbereich bzw. die Axialwälzlaufbahn 16 hinaus stehen.

Wie aus Figur 5 ersichtlich ist, weist die Ölstauscheibe 22 stummelartig ausgebildete Durchzüge 24 auf, die stirnseitig plan am Rand der Schmieröffnungen 12 der Planetenbolzen 2 anliegen und in die Schmierkanäle 19 übergehen.

Die Ölstauscheibe 13 ist mit einem Ringabschnitt axial zwischen der Axialscheibe 9 und dem Wandabschnitt 10 so angeordnet, dass die Axialscheibe 9 die Ölstauscheibe 13 radial von innen nach außen gerichtet teilweise überlappt. Der in Figur 1 mit dem Doppelpfeil angedeutete Ölfluss 14 strömt zunächst durch das Axiallager 6 und passiert dann den Überlappungsbereich 15. Der Schmierung geht am Überlappungsbereich 15 aufgrund der radial von der Rotationsachse 17 des Planetenträgers 1 weg gerichteten Fliehkräfte kaum Öl verloren.

Die Ölstauscheibe 13 bzw. 22 weist radial außen im Anschluss an die Öffnungen 12 eine Ölsammelrille 25 auf. Die Ölsammelrille 25 ist radial nach außen und axial in beide Richtungen durch Material der Ölstauscheibe 25 begrenzt und radial nach innen zur Rotationsachse 17 des Planetenträges 1 hin offen. Dazu verläuft die Ölstauscheibe 13 bzw. 22 zunächst radial von innen nach außen ausgerichtet. Im weiteren Verlauf verläuft die Ölstauscheibe 13 bzw. 22 an der Ölsammelrille 25 zurück in Richtung der Rotationsachse 17 des Planetenträgers 1 gekrümmt und verläuft schließlich radial in Richtung der Rotationsachse 17 des Planetenträgers 1 gerichtet zumindest soweit, bis ein Ringscheibenabschnitt 26 aus dem Material Ölstauscheibe 13 bzw. 22 den Schmieröffnungen 12 axial gegenüber liegt.

Die Axialscheibe 9 ist im Formschluss mit einer weiteren Axialscheibe 27 an dem Wandabschnitt 10 fest (Figur 3 und Figur 4). Die Axialscheibe 27 liegt an der von der Ölstauscheibe 13 abgewandten Seite des Wandabschnitts 10 an und greift mit wenigstens einem axialen Fortsatz 28 in einen zentralen Durchgang 29 an dem Wandabschnitt 10 hinein. Die Axialscheibe 9 greift über den Fortsatz 30 in den Durchgang 29 und ist mit der Axialscheibe 27 am Fortsatz 28 verschnappt.

### Bezugszeichen

- 1: Planetenträger
- 2: Planetenbolzen
- 3: Planetenrad
- 4: Wälzlagerung
- 5: Gehäuse
- 6: Axiallager
- 7: Nadeln
- 8: Käfig
- 9: Axialscheibe
- 10: Wandabschnitt
- 11: Schmierölzufuhr
- 12: Schmieröffnungen
- 13: Ölstauscheibe
- 14: Ölfluss
- 15: Überlappungsbereich
- 16: Axialwälzlaufbahn
- 17: Rotationsachse
- 18: Ölleiter
- 19: Schmierkanal
- 20: Ringspalt
- 21: Axialspiel
- 22: Ölstauscheibe
- 23: Absatz
- 24: Durchzüge
- 25: Ölsammelrille
- 26: Ringscheibenabschnitt
- 27: Axialscheibe
- 28: Fortsatz
- 29: Durchgang
- 30: Fortsatz

## Patentansprüche

1. Planetenträger (1) mit Planetenbolzen (2), die in wenigstens einem Wandabschnitt (10) des Planetenträgers (1) abgestützt sind, wobei der Planetenträger (1) mit mindestens einem an dem Wandabschnitt (10) abgestützten Axiallager (6) versehen ist, wobei das Axiallager (6) mittels wenigstens einer Axialscheibe (9) an dem Wandabschnitt (10) abgestützt ist, wobei der Planetenträger (1) weiter zumindest eine die Planetenbolzen (2) übergreifende Schmierölzufuhr (11) zu den Planetenbolzen (2) aufweist, und wobei die Schmierölzufuhr (11) wenigstens eine am Planetenträger (1) festgelegte und dabei Schmieröffnungen (12) zu den hohlen Planetenbolzen (2) übergreifende Ölstauscheibe (13, 22) aufweist, **dadurch gekennzeichnet, dass** die Ölstauscheibe (13, 22) teilweise axial zwischen der Axialscheibe (9) und dem Wandabschnitt (10) angeordnet ist, so dass die Axialscheibe (9) die Ölstauscheibe (13, 22) radial von innen nach außen gerichtet teilweise überlappt.

2. Planetenträger nach Anspruch 1, **dadurch gekennzeichnet, dass** die Ölstauscheibe (22) zumindest mittels der Axialscheibe (9) an dem Wandabschnitt (10) gehalten ist.

3. Planetenträger nach Anspruch 1, **dadurch gekennzeichnet, dass** die Ölstauscheibe (22) an der Axialscheibe (9) zur Rotationsachse (17) des Planetenträgers (1) zentriert ist.

4. Planetenträger, bei dem das Axiallager (6) ein Axialwälzlager (6) mit Wälzkörpern und mit einer ringscheibenförmigen Axialwälzlaufbahn (16) für die Wälzkörper an der Axialscheibe (9) ist, nach Anspruch 1, **dadurch gekennzeichnet, dass** die Axialscheibe (9) zumindest rückseitig der Axialwälzlaufbahn (16) an dem Wandabschnitt (10) abgestützt ist.

5. Planetenträger nach Anspruch 4, **dadurch gekennzeichnet, dass** die Axialscheibe (9) radial außen im Anschluss an die ringscheibenförmige Axialwälzlaufbahn (16) von dem Wandabschnitt (10) absteht, so dass radial im Anschluss an die ringscheibenförmige Axialwälzlaufbahn (16) ein Ringspalt (20) zwischen dem Wandabschnitt (10) und der Axialscheibe (9) ausgebildet ist, wobei die Ölstauscheibe (13, 22) zumindest teilweise radial in den Ringspalt (20) eintaucht.

6. Planetenträger nach Anspruch 1, **dadurch gekennzeichnet, dass** aus der Ölstauscheibe (13) axial Ölleiter (18) hervorstehen wobei die Ölleiter (18) in die hohlen Planetenbolzen (2) hineinragen.

7. Planetenträger nach Anspruch 6, **dadurch gekennzeichnet, dass** die Ölstauscheibe (13) mittels der Ölleiter (18) an dem Wandabschnitt (10) festgelegt ist.

8. Planetenträger nach Anspruch 6, **dadurch gekennzeichnet, dass** die Ölstauscheibe (13) mittels der Ölleiter (18) zur Rotationsachse (17) des Planetenträgers (1) zentriert ist.

9. Planetenträger nach Anspruch 6, **dadurch gekennzeichnet, dass** die Ölleiter (18) hohlzylindrisch sind.

10. Planetenträger nach Anspruch 6, **dadurch gekennzeichnet, dass** die Ölstauscheibe (13) und die Ölleiter (18) einteilig ausgebildet sind.

11. Planetenträger nach Anspruch 6, **dadurch gekennzeichnet, dass** die Ölstauscheibe (13) die Schmieröffnungen (12) zu den hohlen Planetenbolzen (2) aufweist, wobei sich von jeder der axialen Schmieröffnungen (12) aus über die Ölleiter (18) ein Schmierkanal (19) in den Planetenbolzen (2) erstreckt.

12. Planetenträger nach Anspruch 1, 6 oder 10, **dadurch gekennzeichnet, dass** die Ölstauscheibe (13, 22) die Schmieröffnungen (12) zu den hohlen Planetenbolzen (2) aufweist, wobei sich von jeder der axialen Schmieröffnungen (12) aus ein Schmierkanal (19) in den Planetenbolzen (2) erstreckt.

13. Planetenträger nach Anspruch 1, **dadurch gekennzeichnet, dass** die Ölstauscheibe (13, 22) radial außen im Anschluss an die Schmieröffnungen (12) eine Ölsammelrille (25) aufweist, wobei die Ölsammelrille (25) radial nach außen und axial in beide Richtungen durch Material der Ölstauscheibe (13, 22) begrenzt und radial nach innen zur Rotationsachse (17) des Planetenträges (1) hin offen ist.

14. Planetenträger nach Anspruch 12, **dadurch gekennzeichnet, dass**, die Ölstauscheibe (13, 22) zunächst radial von innen nach außen ausgerichtet verläuft, dann im weiteren Verlauf an der Ölsammelrille (25) zurück in Richtung der Rotationsachse (17) des Planetenträgers (1) gekrümmt ist und schließlich radial in Richtung der Rotationsachse (17) des Planetenträgers (1) gerichtet zumindest soweit verläuft, bis ein Ringscheibenabschnitt (26) aus dem Material der Ölstauscheibe (13, 22) den Schmieröffnungen (12) axial gegenüber liegt.

## Claims

1. Planet carrier (1) comprising planet pins (2) that are supported in at least one wall section (10) of the planer carrier (1), which planet carrier (1) is provided with at least one thrust bearing (6) that is supported on the wall section (10), said thrust bearing (6) being supported through at least one thrust washer (9) on this wall section (10), said planet carrier (1) further comprising at least one lubricating oil supply (11) to the planet pins (2) which overlaps the planet pins (2), and said lubricating oil supply (11) comprising at least one oil retaining baffle (13, 22) that is fixed on the planet carrier (1) while overlapping lubrication holes (12) leading to the hollow planet pins (2), **characterised in that** the oil retaining baffle (13, 22) is arranged axially partially between the thrust washer (9) and the wall section (10), so that the thrust washer (9) partially overlaps the oil retaining baffle (13, 22) while being oriented radially from the inside towards the outside.

2. Planet carrier according to claim 1, **characterised in that** the oil retaining baffle (22) is retained on the wall section (10) at least by means of the thrust washer (9).

3. Planet carrier according to claim 1, **characterised in that** the oil retaining baffle (22) is centred on the thrust washer (9) around the axis of rotation (17) of the planet carrier (1).

4. Planet carrier wherein the thrust bearing (6) is a thrust rolling bearing (6) with rolling elements and with an annular disk-shaped thrust rolling raceway (16) for the rolling elements on the thrust washer (9), according to claim 1, **characterised in that** the thrust washer (9) is supported at least on the rear side of the thrust rolling raceway (16) on the wall section (10).

5. Planet carrier according to claim 4, **characterised in that** that, on a radially outer side, adjoining the annular disk-shaped thrust rolling raceway (16), the thrust washer (9) is spaced from the wall section (10), so that, in radial direction adjoining the annular disk-shaped thrust rolling raceway (16), an annular gap (20) is formed between the wall section (10) and the thrust washer (9), and the oil retaining baffle (13, 22) plunges radially, at least partially, into the annular gap (20).

6. Planet carrier according to claim 1, **characterised in that** oil conductors (18) project in axial direction out of the oil retaining baffle (13) and extend into the hollow planet pins (2).

7. Planet carrier according to claim 6, **characterised in that** the oil retaining baffle (13) is fixed on the wall section (10) by means of the oil conductors (18).

8. Planet carrier according to claim 6, **characterised in that** the oil retaining baffle (13) is centred by means of the oil conductors (18) around the axis of rotation (17) of the planet carrier (1).

9. Planet carrier according to claim 6, **characterised in that** the oil conductors (18) have a hollow cylindrical configuration.

10. Planet carrier according to claim 6, **characterised in that** the oil retaining baffle (13) and the oil conductors (18) are made in one piece with one another.

11. Planet carrier according to claim 6, **characterised in that** the oil retaining baffle (13) comprises the lubrication holes (12) leading to the hollow planet pins (2), and a lubrication channel (19) extends from each of the axial lubrication holes (12) via the oil conductors (18) into the planet pins (2).

12. Planet carrier according to claim 1, 6 or 10, **characterised in that** the oil retaining baffle (13, 22) comprises the lubrication holes (12) leading to the hollow planet pins (2), and a lubrication channel (19) extends from each of the axial lubrication holes (12) into the planet pins (2).

13. Planet carrier according to claim 1, **characterised in that** the oil retaining baffle (13, 22) comprises, on a radially outer side adjoining the lubrication holes (12), an oil collecting groove (25) that is defined radially towards the outside and axially in both directions by material of the oil retaining baffle (13, 22), and is open radially towards the inside towards the axis of rotation (17) of the planet carrier (1).

14. Planet carrier according to claim 12, **characterised in that** the oil retaining baffle (13, 22) extends at first radially from the inside towards the outside, and is bent back, in its further course, at the oil collecting groove (25), towards the axis of rotation (17) of the planet carrier (1) and then extends finally radially in the direction of the axis of rotation (17) of the planet carrier (1) at least to an extent that an annular baffle section (26) out of the material of the oil retaining baffle (13, 22) is situated axially opposite the lubrication holes (12).

## Revendications

1. Porte-satellites (1) comprenant des axes (2) de satellite qui sont supportés dans, au moins, une section (10) de paroi, ledit porte-satellites (1) étant muni, au moins, d'une butée (6) qui est supportée sur la section (10) de paroi, ladite butée (6) étant supportée sur la section (10) de paroi par, au moins, une rondelle (9) de butée, ledit porte-satellites (1) comprenant, en plus, au moins, une alimentation (11) en huile lubrifiante pour les axes (2) de satellite qui recouvre les axes (2) de satellite, et ladite alimentation (11) en huile lubrifiante comprenant, au moins, un disque (13, 22) de retenue d'huile qui est fixé sur le porte-satellites (1) en recouvrant des ouvertures (12) de lubrification pour les axes (2) creux de satellite, **caractérisé en ce que** le disque (13, 22) de retenue d'huile est agencé axialement partiellement entre la rondelle (9) de butée et la section (10) de paroi, de sorte que la rondelle (9) de butée recouvre partiellement le disque (13, 22) de retenue d'huile en étant orientée radialement à partir de l'intérieur vers l'extérieur.

2. Porte-satellites selon la revendication 1, **caractérisé en ce que** le disque (22) de retenue d'huile est retenu sur la section (10) de paroi à l'aide, au moins, de la rondelle (9) de butée.

3. Porte-satellites selon la revendication 1, **caractérisé en ce que** le disque (22) de retenue d'huile est centré sur la rondelle (9) de butée autour de l'axe de rotation (17) du porte-satellites (1).

4. Porte-satellites dans lequel la butée (6) est une butée (6) de roulement comprenant des corps roulants et une piste (16) de butée de roulement en forme d'un disque annulaire pour les corps roulants sur la rondelle (9) de butée, selon la revendication 1, **caractérisé en ce que** la rondelle (9) de butée est supportée, au moins, à la face arrière de la piste (16) de butée de roulement sur la section (10) de paroi.

5. Porte-satellites selon la revendication 4, **caractérisé en ce que**, de son côté radialement extérieur, adjacent à la piste (16) de butée de roulement en forme d'un disque annulaire, la rondelle (9) de butée est écartée de la section (10) de paroi, de sorte que, radialement adjacent à la piste (16) de butée de roulement en forme d'un disque annulaire se forme un intervalle (20) annulaire entre la section (10) de paroi et la rondelle (9) de butée, et le disque (13, 22) de retenue d'huile s'enfonce radialement, au moins, partiellement dans l'intervalle (20) annulaire.

6. Porte-satellites selon la revendication 1, **caractérisé en ce que** des chicanes (18) d'huile font axialement saillie à partir du disque (13) de retenue d'huile et s'étendent dans les axes (2) creux des satellites.

7. Porte-satellites selon la revendication 6, **caractérisé en ce que** le disque (13) de retenue d'huile est fixé sur la section (10) de paroi au moyen des chicanes (18) d'huile.

8. Porte-satellites selon la revendication 6, **caractérisé en ce que** le disque (13) de retenue d'huile est centré autour de l'axe de rotation (17) du porte-satellites (1) au moyen des chicanes (18) d'huile.

9. Porte-satellites selon la revendication 6, **caractérisé en ce que** les chicanes (18) d'huile ont une configuration cylindrique creuse.

10. Porte-satellites selon la revendication 6, **caractérisé en ce que** le disque (13) de retenue d'huile et les chicanes (18) d'huile sont configurés en une seule pièce, les uns avec les autres.

11. Porte-satellites selon la revendication 6, **caractérisé en ce que** le disque (13) de retenue d'huile comprend les ouvertures (12) de lubrification vers les axes (2) creux des satellites, et un canal (19) de lubrification s'étend à partir de chacune des ouvertures axiales (12) de lubrification, à la faveur des chicanes (18) d'huile, dans les axes (2) des satellites.

12. Porte-satellites selon l'une des revendications 1, 6 ou 10, **caractérisé en ce que** le disque (13, 22) de retenue d'huile comprend les ouvertures (12) de lubrification vers les axes (2) creux des satellites, et un canal (19) de lubrification s'étend à partir de chacune des ouvertures axiales (12) de lubrification dans les axes (2) des satellites.

13. Porte-satellites selon la revendication 1, **caractérisé en ce que**, du côté radialement extérieur, adjacent aux ouvertures (12) de lubrification, le disque (13, 22) de retenue d'huile comprend une gorge (25) d'accumulation d'huile, cette gorge (25) d'accumulation d'huile étant définie radialement vers l'extérieur et axialement dans les deux directions par du matériau du disque (13, 22) de retenue d'huile en étant ouverte radialement vers l'intérieur, vers l'axe de rotation (17) du porte-satellites (1).

14. Porte-satellites selon la revendication 12, **caractérisé en ce que** le disque (13, 22) de retenue d'huile s'étend, d'abord, radialement à partir de l'intérieur vers l'extérieur, puis, dans sa course suivante, au niveau de la gorge (25) d'accumulation d'huile, il est recourbé dans la direction de l'axe de rotation (17) du porte-satellites (1) et, finalement, il s'étend radialement en direction de l'axe de rotation (17) du porte-satellites (1), au moins, jusqu'au moment où une section (26) du disque annulaire formée à partir du matériau du disque (13, 22) de retenue d'huile vient se situer axialement vis-à-vis des ouvertures (12) de lubrification.
